# EUROPEAN PATENT SPECIFICATION

(11) **EP 3 987 265 B1**
(45) Date of publication and mention of the grant of the patent: **03.01.2024**
(21) Application number: 20710983.6
(22) Date of filing: 19.03.2020
(51) Int. Cl.: G01M 3/00, F17D 5/02, F24D 10/00, F24H 9/16, G01M 3/28

(54) **LEAKAGE DETECTION IN A DISTRIBUTION SYSTEM FOR DISTRIBUTING A FLUID**
LECKAGEDETEKTION IN EINEM ENERGIEVERTEILUNGSSYSTEM
DÉTECTION DE FUITE DANS UN SYSTÈME DE DISTRIBUTION D'ÉNERGIE

(30) Priority: 05.09.2019 EP 19195592
(43) Date of publication of application: 27.04.2022
(73) Proprietor: E.ON Sverige AB, 205 09 Malmö (SE)
(72) Inventor: SKOGSTRÖM, Jacob, 234 42 Lomma (SE); CARLSTRÖM, Helen, 237 36 Bjärred (SE); ROSÉN, Per, 227 33 Lund (SE); ROSENQVIST, Fredrik, 254 51 Helsingborg (SE); LINDOFF, Bengt, 237 35 Bjärred (SE)
(74) Representative: AWA Sweden AB
(86) International application number: PCT/EP2020/057624
(87) International publication number: WO 2021/043449

(56) References cited:
- CN-A- 107 121 238
- CN-A- 110 131 784
- GB-A- 2 229 304

## Description

### Field of the invention

The invention generally relates to locating a leak in a distribution system configured to distribute a fluid, especially in a conduit of the distribution system being at least partly buried in ground. According to one example, the invention relates to leakage detection in an energy distribution system. The invention also relates to leakage detection in a fresh water distribution system.

### Background of the invention

Today, it is common practice to use distribution systems comprising one or more conduit to distribute a liquid. Examples of distribution systems for distribute a liquid is a thermal energy distribution system and a fresh water distribution system. However, large parts of the conduits of the distribution system for distributing a fluid are usually buried in the ground, an arrangement which makes it difficult to locate possible leaks in the conduits. An undiscovered leak can provide large damages, both for the distribution system itself, but also for the customers. Further, undiscovered leaks in an energy distribution system can also be very costly since more energy might be needed than normally in combination with that fluid is transported to the ground instead of in the system. Moreover, undiscovered leaks in a fresh water distributing system can also be very costly since fresh water is leaking out from the system not arriving at the customers.

Therefore, there is a need in easier being able to locate leaks occurred in the conduits of the distribution system configured to distribute a fluid, especially in the conduits buried in the ground. State of the art leak detection systems are known from CN 110 131 784 A, GB 2 229 304 A and CN 107 121 238 A.

### Summary of the invention

It is an object of the present invention to improve the possibility for finding a leak in a distribution system configured to distribute a fluid via a distribution grid, especially a distribution grid comprising a conduit at least partly buried in ground. According to one example, it is an object of the present invention to improve the possibility for finding a leak in an energy distribution system, especially energy distribution system comprising a distribution grid configured to distribute thermal energy via a heat transfer liquid. According to another example, it is an object of the present invention to improve the possibility for finding a leak in a fresh water distribution system, especially in a conduit if the fresh water distribution system being buried in ground.

According to a first aspect, as defined in claim 1, a method for locating a leak in a distribution system configured to distribute a liquid is provided. The distribution system comprising at least one buried conduit. The method comprising: receiving an alarm indicating existence of a leak in the distribution system; in response to the alarm, adjusting a temperature of the liquid of the distribution system; and locating the leak by detecting, using thermography, a position along the at least one buried conduit at which position a deviation in ground temperature, induced by the adjusted temperature, exists.

The distribution system configured to distribute a liquid may be an energy distribution system. The liquid may be a heat transfer liquid distributed in the energy distribution system.

The distribution system configured to distribute a liquid may be a fresh water distribution system. The liquid may be water distributed in the fresh water distribution system.

By using the present method for locating the leak in the distribution system, the position of the leak can be identified without causing any unnecessary damages on the ground and/or in the distribution system. By using thermography, it is easy to locate the position of the leak based on temperature deviations in the ground temperature. This method may verify in which conduit the leak has occurred. By this method, costs in connection with the detection of the leak may be reduced. This since, unnecessary digging in order to check for a possible leak may be avoided. Further, the time between an alarm indicating existence of a leak and a location of the possible leak may be reduced. This may reduce loss of liquid. In case of an energy distribution system, this may reduce loss of energy in the energy distribution system. Moreover, by improving the possibility for finding leaks in distribution systems presented here, the operation time for finding and solving possible damages occurred in the distribution system may be reduced.

The step of receiving the alarm indicating existence of a leak in the distribution system may comprise: monitoring a volume of liquid in the distribution system, and upon the volume being below a predetermined threshold, generating the alarm.

The step of receiving the alarm indicating existence of a leak in the distribution system may comprise: monitoring a rate of decrease of volume of liquid in the distribution system, and upon the rate of decrease of volume being above a predetermined threshold, generating the alarm.

The step of adjusting the temperature of the liquid of the distribution system may comprise increasing the temperature. The temperature may be increased by at least 5 degrees Celsius, preferably at least 10 degrees Celsius.

The step of adjusting the temperature of the liquid of the distribution system may comprise decreasing the temperature. The temperature may be decreased by at least 5 degrees Celsius, preferably at least 10 degrees Celsius.

The thermography may be performed by a drone, wherein the drone may comprise a thermal camera. A drone is to be understood as an unmanned aerial vehicle, i.e. an aircraft without a human pilot on board.

The step of detecting a position may comprise comparing a present thermography with a baseline thermography.

The present thermography may be performed within 1-10 hours, preferably 1-6 hours, from the adjusting of the temperature.

According to a second aspect, a central control server is provided as defined in claim 10. The central control server is configured to control a distribution system configured to distribute a liquid, the distribution system comprising at least one conduit configured to transport the liquid, the at least one conduit being at least partly buried in ground. The central control server comprising: a control circuitry and a transceiver. The control circuitry is configured to execute a leak alarm function configured to generate a leak alarm indicating existence of a leak in the distribution system. The control circuitry is configured to execute a temperature adjustment function configured to, in response to the leak alarm, generate a temperature control signal, the temperature control signal comprising information to adjust a temperature of the liquid of the distribution system. The control circuitry is configured to execute a drone activation function configured to generate a drone control signal. The transceiver is configured to send the temperature control signal to a device configured to adjust the temperature of the liquid of the energy distribution system in response to the temperature control signal. The transceiver is configured to send the drone control signal to a drone, wherein the drone is configured to perform a present thermography of the distribution system. The transceiver is configured to receive the present thermography from the drone. The control circuitry is further configured to execute a deviation location function configured to locate a leak in the distribution system based on the present thermography.

The deviation location function may be configured to locate a leak in the distribution system based on a comparison between the present thermography and a baseline thermography of the distribution system. The baseline thermography may be made under normal operation of the energy distribution system.

The distribution system configured to distribute a liquid may be a thermal energy distribution system. The liquid may be a heat transfer liquid distributed in the energy distribution system. The device configured to adjust the temperature of the liquid of the distribution system may comprise one or more of a thermal device connected to the distribution system and a thermal server plant connected to the distribution system.

The distribution system configured to distribute a liquid may be a fresh water distribution system. The liquid may be water distributed in the fresh water distribution system. The device configured to adjust the temperature of the liquid of the system comprise one or more of an electric heater, a heat pump, a cooling machine and a heat exchanger.

The above mentioned features of the method according to the first aspect, when applicable, apply to this second aspect as well. In order to avoid undue repetition, reference is made to the above.

According to a third aspect a system is provided. The system comprising: an energy distribution system comprising at least one conduit configured to transport heat transfer liquid, the at least one conduit being at least partly buried in ground; a plurality of thermal devices connected to the energy distribution system; a drone comprising a thermal camera; and a central control server according to the second aspect.

The system may further comprise a thermal server plant connected to the energy distribution system.

The above mentioned features of the method according to the first aspect, when applicable, apply to this third aspect as well. In order to avoid undue repetition, reference is made to the above.

According to a fourth aspect a system is provided. The system comprising: a fresh water distribution system comprising at least one conduit configured to transport fresh water, the at least one conduit being at least partly buried in ground; a device configured to adjust a temperature of the fresh water; a drone comprising a thermal camera; and a central control server according to the second aspect.

A further scope of applicability of the present invention will become apparent from the detailed description given below. However, it should be understood that the detailed description and specific examples, while indicating preferred embodiments of the invention, are given by way of illustrations only, since various changes and modifications within the scope of the invention will become apparent to those skilled in the art from this detailed description.

Hence, it is to be understood that this invention is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claims, the articles "a", "an", "the", and "said" are intended to mean that there are one or more elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

These and other aspects of the present invention will now be described in more detail, with reference to the appended drawings showing embodiments of the invention. The figures are provided to illustrate the general structures of embodiments of the present invention. Like reference numeral refer to like elements throughout.
Fig. 1a is a schematic diagram of a distribution system for distributing a liquid in the form of an energy distribution system.
Fig. 1b is a schematic diagram of a distribution system for distributing a liquid in the form of a fresh water distribution system.
Figs 2a and 2b are schematic views of a portion of a conduit of the energy distribution system of Fig. 1 buried in ground.
Fig. 3 is a schematic view of a central control server configured to control the distribution system for distributing a liquid of Fig. 1a or Fig 1b.
Fig. 4 is a flow chart illustrating a method for locating a leak in a distribution system configured to distribute a liquid.

### Detailed description

The present invention will now be described more fully herein with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

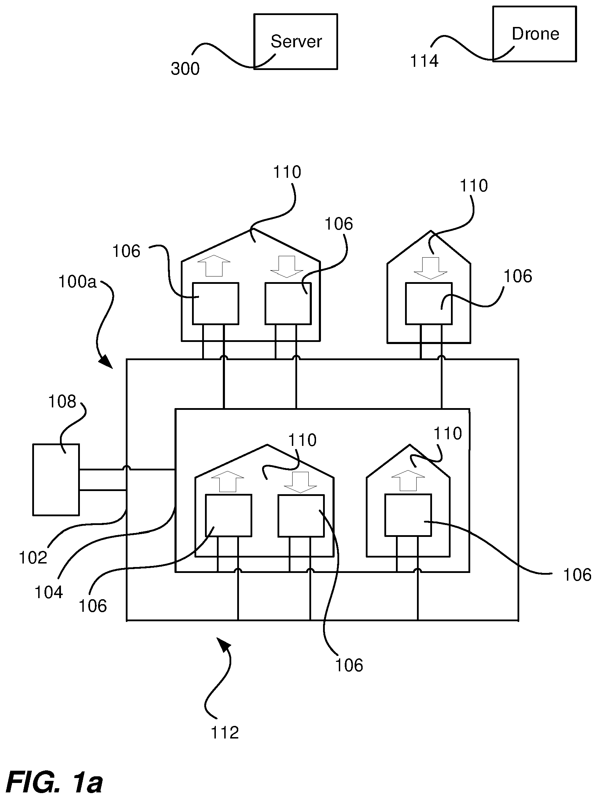

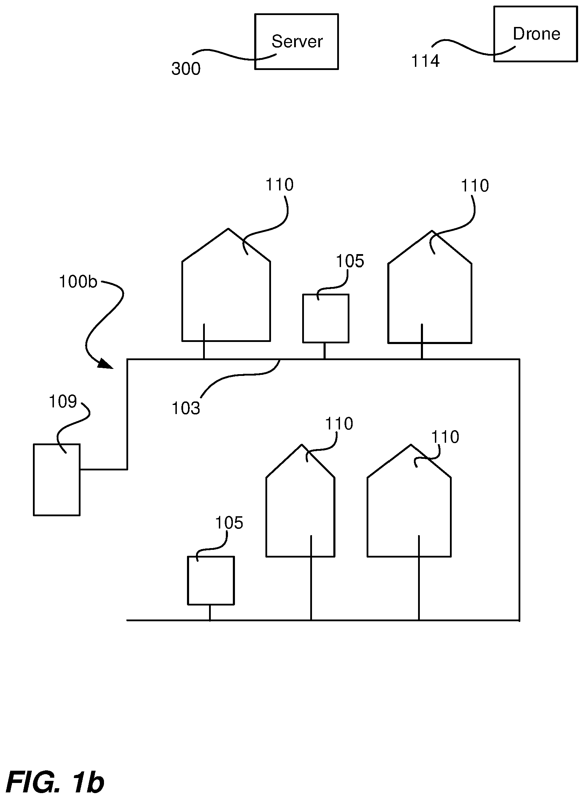

In connection with Figs 1a and 1b different examples of distribution systems for distributing a liquid will be discussed. Fig 1a illustrates an energy distribution system 100a and Fig 1b illustrates a fresh water distribution system 100b.

Fig. 1a generally illustrates an energy distribution system 100a in the form of a combined district heating and cooling system. The energy distribution system 100a can utilize heat pumps for energy efficient heating and/or cooling of buildings. The energy distribution system 100a comprises a thermal energy circuit 112 and a plurality of buildings 110. The plurality of buildings 110 can be thermally coupled to the thermal energy circuit 112, which can be arranged to circulate and store thermal energy in heat transfer liquid flowing through the thermal energy circuit.

By way of example, the heat transfer liquid comprises water. However, according to another example, other heat transfer liquids may be used. Some non-limiting examples are ammonia, oils, alcohols and anti-freezing liquids such as glycol. The heat transfer liquid may also comprise a mixture of two or more of the heat transfer liquids mentioned above.

The thermal energy circuit can comprise a hot conduit 102 for transporting hot liquid in a hot fluid direction and a cold conduit 104 for transporting cold liquid in a cold fluid direction. The hot fluid direction may be opposite to the cold fluid direction.

The hot conduit 102 is configured to allow heat transfer liquid of a hot liquid temperature to flow there through. The cold conduit 104 is configured to allow heat transfer liquid of a cold liquid temperature to flow there through. The cold liquid temperature is lower than the hot liquid temperature.

The hot conduit 102 and the cold conduit 104 are separated. The hot conduit 102 and the cold conduit 104 may be arranged as closed loops of piping. The hot conduit 102 and the cold conduit 104 may be arranged as open loops of piping. The hot conduit 102 and the cold conduit 104 are fluidly interconnected at the plurality of buildings 110 for allowing of thermal energy transfer to and from the plurality of buildings 110. The differential pressure between heat transfer liquid of the hot conduit 102 and heat transfer liquid of the cold conduit 104 are allowed to vary over time. Especially, sometimes the pressure of heat transfer liquid of the hot conduit 102 is higher than the pressure of heat transfer liquid of the cold conduit 104 and other times it is vice versa.

The two conduits 102, 104, of the thermal energy circuit may be formed by plastics, composite, concrete or metal pipes. By way of example, High Density Polyethylene, HDPE, pipes may be used. The pipes may be single wall pipes. The pipes may be un-insulated. The two conduits 102, 104 are typically at least partly buried in ground.

Under normal operation, in case the heat transfer liquid is water, the hot liquid temperature in the hot conduit is in the range of 5-50, preferably 10-40 degrees Celsius and the cold liquid temperature in the cold conduit is in the range of 1-45, preferably 5-35 degrees Celsius. Under normal operation, the difference in temperature between the hot liquid temperature and the cold liquid temperature may be in the range of 1-25, preferably 2-15, more preferably 5-10 degrees Celsius.

A plurality of thermal devices 106 is connected to the energy distribution system 100a. Each thermal device 106 is connected to the hot conduit 102 and to the cold conduit 104. Each thermal device 106 is configured to extract heat and/or cold from the thermal energy circuit and deposit the heat and/or cold in a building 110 wherein the thermal device 106 is located.

Further a thermal server plant 108 may be connected to the energy distribution system 100a. The thermal server plant 108 is configured to balance the thermal energy within the energy distribution system 100a. The thermal server plant 108 is configured to heat (or cool) the heat transfer liquid of the system. The thermal server plant 108 functions as an external thermal source and/or thermal sink. The function of the thermal server plant 108 may be to maintain the temperature difference between the hot and cold conduits 102, 104 of the thermal energy circuit. The function of the thermal server plant 108 may further be to regulate the pressure difference between the hot and cold conduits 102, 104 of the thermal energy circuit. The thermal server plant 108 may be a geothermal plant, an electrically powered plant for heating (or cooling) liquids, or may be driven by combustion of fuels, such as gas or oil.

The thermal devices 106 is categorized into local thermal energy consumer assemblies and local thermal energy generator assemblies. A local thermal energy consumer assembly is arranged to transfer thermal energy from heat transfer liquid of the thermal energy circuit to surroundings of the local thermal energy consumer assembly. This is achieved by transfer thermal energy from heat transfer liquid taken from the hot conduit 102 to surroundings of the local thermal energy consumer assembly such that heat transfer liquid returned to the cold conduit 104 has a temperature lower than the hot liquid temperature and preferably a temperature equal to the cold liquid temperature. A local thermal energy generator assembly is configured to transfer thermal energy from its surroundings to heat transfer liquid of the thermal energy circuit. This is achieved by transfer thermal energy from surroundings of the local thermal energy generator assembly to heat transfer liquid taken from the cold conduit 104, such that heat transfer liquid returned to the hot conduit 102 has a temperature higher than the cold liquid temperature and preferably a temperature equal to the hot liquid temperature.

Each building 110 comprises at least one of one or more local thermal energy consumer assemblies and one or more local thermal energy generator assemblies. Hence, each building comprises at least one local thermal energy consumer assembly or at least one local thermal energy generator assembly. One specific building 110 may comprise more than one local thermal energy consumer assembly. One specific building 110 may comprise more than one local thermal energy generator assembly. One specific building 110 may comprise both a local thermal energy consumer assembly and a local thermal energy generator assembly.

The one or more local thermal energy consumer assemblies may be installed in the buildings 110 as local heaters for different heating needs. As a non-limiting example, a local heater may be arranged to deliver comfort heating or hot tap water preparation. Alternatively, or in combination, the local heater may deliver pool heating or ice- and snow purging. Hence, the local thermal energy consumer assembly is arranged for deriving heat from heat transfer liquid of the hot conduit 102 and creates a cooled heat transfer liquid flow into the cold conduit 104. Hence, the local thermal energy consumer assembly fluidly interconnects the hot and cold conduits 102, 104, such that hot heat transfer liquid can flow from the hot conduit 102 through the local thermal energy consumer assembly and then into the cold conduit 104 after thermal energy in the heat transfer liquid has been consumed by the local thermal energy consumer assembly. The local thermal energy consumer assembly operates to draw thermal energy from the hot conduit 102 to heat the buildings 110 and then deposits the cooled heat transfer liquid into the cold conduit 104.

The one or more local thermal energy generator assemblies may be installed in different buildings 110 as local coolers for different cooling needs. As an non-limiting example a local cooler may be arranged to deliver space cooling or cooling for freezers and refrigerators. Alternatively, or in combination, the local cooler may deliver cooling for ice rinks and ski centers or ice- and snow making. Hence, the local thermal energy generator assembly is deriving cooling from heat transfer liquid of the cold conduit 104 and creates a heated heat transfer liquid flow into the hot conduit 102. Hence, the local thermal energy generator assembly fluidly interconnects the hot and cold conduits 102, 104, such that cold heat transfer liquid can flow from the cold conduit 104 through the local thermal energy generator assembly and then into the hot conduit 102 after thermal energy has been generated into the heat transfer liquid by the local thermal energy generator assembly. The local thermal energy generator assembly operates to extract heat from the plurality of buildings 110 to cool the plurality of buildings 110 and deposits that extracted heat into the hot conduit 102.

The local thermal energy consumer assembly is selectively connected to the hot conduit 102 via a valve and a pump. Depending on the differential pressure between heat transfer liquid of the hot conduit 102 and heat transfer liquid of the cold conduit 104 sometimes heat transfer liquid from the hot conduit 102 needs to flow into the local thermal energy consumer assembly and other times heat transfer liquid from the hot conduit 102 needs to be pumped into the local thermal energy consumer assembly. Upon selecting the connection of the local thermal energy consumer assembly to the hot conduit 102 to be via the valve, heat transfer liquid from the hot conduit 102 is allowed to flow into the local thermal energy consumer assembly. Upon selecting the connection of the local thermal energy consumer assembly to the hot conduit 102 to be via the pump, heat transfer liquid from the hot conduit 102 is pumped into the local thermal energy consumer assembly.

The local thermal energy generator assembly is selectively connected to the cold conduit 104 via a valve and a pump. Depending on the differential pressure between heat transfer liquid of the hot conduit 102 and heat transfer liquid of the cold conduit 104 sometimes heat transfer liquid from the cold conduit 102 needs to flow into the local thermal energy generator assembly and other times heat transfer liquid from the cold conduit 104 needs to be pumped into the local thermal energy generator assembly. Upon selecting the connection of the local thermal energy generator assembly to the cold conduit 104 to be via the valve, heat transfer liquid from the cold conduit 104 is allowed to flow into the local thermal energy generator assembly. Upon selecting the connection of the local thermal energy generator assembly to the cold conduit 104 to be via the pump, heat transfer liquid from the cold conduit 104 is pumped into the local thermal energy generator assembly.

The thermal server plant 108 and/or the thermal devices 106 may be controlled such that the temperature of heat transfer liquid of the hot conduit 102 and/or the heat transfer liquid of the cold conduit 104 is/are altered. The controlling of the thermal server plant 108 and/or the thermal devices 106 may be made from a central control server 300. The central control server 300 is configured to generate a temperature control signal for the thermal server plant 108 and/or one or more of the plurality of thermal devices 106. The temperature control signal may comprise individual control signals for the thermal server plant 108 and/or the respective one of the one or more of the plurality of thermal devices 106. The central control server 300 is further configured to send the temperature control signal to the thermal server plant 108 and/or the one or more of the plurality of thermal devices 106. The temperature control signal comprises information instructing the thermal server plant 108 and/or respective one of the plurality of thermal devices 106, receiving the temperature control signal, to adjust the temperature of the heat transfer liquid of the thermal energy circuit.

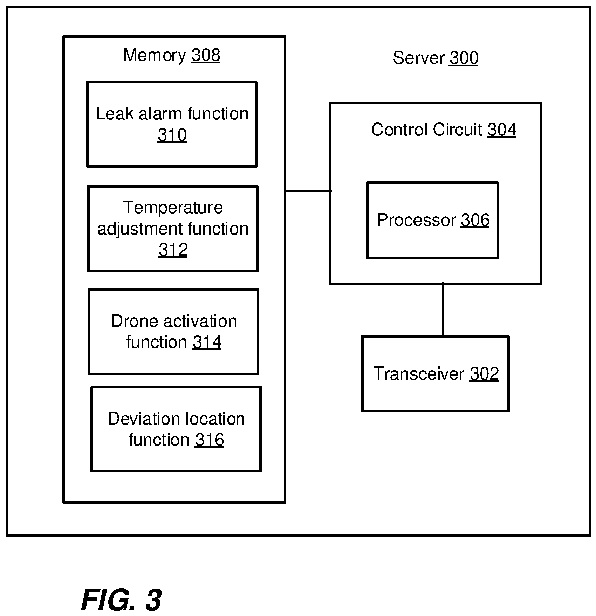

The central control server 300 is further configured to generate a drone control signal for a drone 114. The drone signal comprising information activating the drone 114 to perform a thermography of the energy distribution system 100a, especially of the thermal energy circuit of the energy distribution system 100a, and more especially of the hot conduit 102 and/or the cold conduit 104 of the thermal energy circuit of the energy distribution system 100a. The central control server 300 will be discussed in more detail below in connection with Fig. 3. Also the drone 114 and the thermography of the energy distribution system 100a will be discussed in more detail below in connection with Fig. 3.

Fig. 1b generally illustrates a fresh water distribution system 100b. The fresh water distribution system 100b comprises a fresh water distribution grid comprising at least one fresh water distribution conduit 103. The fresh water distribution system 100b is configured to distribute fresh water to buildings 110 via the at least one fresh water distribution conduit 103. The fresh water distribution system 100b may further comprise a fresh water reservoir 109. The fresh water reservoir 109 may e.g. be in the form of a water tower.

The fresh water distribution system 100b further comprises one or more devices 105 configured to adjust a temperature of the fresh water. Each of the devices 105 may be configured to adjust the temperature of the fresh water locally in a section of the fresh water distribution conduit 103. Examples of devices 105 configured to adjust the temperature of the fresh water are an electric heater, a heat pump, a cooling machine, and a heat exchanger. Each device 105 configured to adjust the temperature of the fresh water may be controlled such that the temperature the fresh water is altered. Especially, each device 105 may be configured to adjust the temperature of the fresh water in a vicinity of where it is connected to the fresh water distribution conduit 103. The fresh water reservoir 109 may comprise a device 105 configured to adjust the temperature of the fresh water.

The controlling of the one or more devices 105 may be made from a central control server 300. The central control server 300 is configured to generate a temperature control signal for the one or more devices 105. The temperature control signal may comprise individual control signals for the respective one of the one or more devices 105. The central control server 300 is further configured to send the temperature control signal to the one or more devices 105. The temperature control signal comprises information instructing the respective one of the one or more devices 106, receiving the temperature control signal, to adjust the temperature of the fresh water of the at least one fresh water distribution conduit 103.

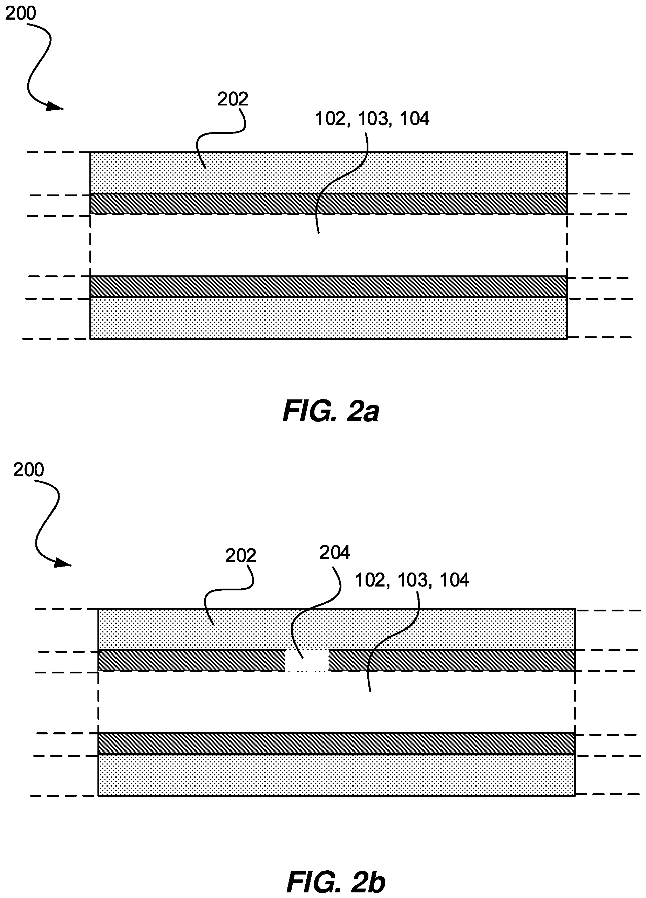

The central control server 300 is further configured to generate a drone control signal for a drone 114. The drone signal comprising information activating the drone 114 to perform a thermography of the fresh water distribution system 100b, especially of the at least one fresh water distribution conduit 103 of the fresh water distribution system 100b. The central control server 300 will be discussed in more detail below in connection with Fig. 3. Also the drone 114 and the thermography of the fresh water distribution system 100b will be discussed in more detail below in connection with Fig. 3.With reference to Figs. 2a and 2b, a schematic cross sectional view of a portion 200 of the conduit 102, 103, 104 of the distribution system configured to distribute a liquid, e.g. the energy distribution system of Fig. 1a or the fresh water distribution system of Fig. 1b, buried in ground 202 is illustrated by way of example. The cross section is taken so that the portion 200 of the conduit 102, 103, 104 is illustrated having ground 202 both above and below. Under normal operation, the temperature of the liquid in the conduit 102, 103 104 is approximately the same as the temperature of the ground 202 surrounding the conduit 102, 103, 104.

With reference to Fig. 2b, the portion 200 of the conduit 102, 103, 104 further comprises a leak 204. Hence, the liquid transported in the conduit 102, 103, 104 may leak out from the conduit 102, 103, 104 to the ground 202 through the leak 204. Upon the leak may have occurred in the conduit 102, 103, 104, a volume of the liquid may decrease due to the liquid leaking out in the ground 202. In addition to what have been discussed above, the volume of the liquid in the distribution system may be controlled by the central control server 300. Upon the volume of the liquid is below a predetermined threshold, the central control server 300 may be configured to generate a leak alarm. Hence, the leak alarm may indicate that the volume of the liquid in the distribution system is too low. Alternatively, or in combination, a rate of change (especially decrease) of volume of liquid in the distribution system may be controlled by the central control server 300. Upon the rate of change of volume of the liquid is above a predetermined threshold, the central control server 300 may be configured to generate a leak alarm. Hence, the leak alarm may indicate that the rate of change of volume of the liquid in the distribution system is too high. The leak alarm may indicate existence of the leak in the distribution system.

In connection with Fig. 3 the central control server 300 will be discussed in more detail. The central control server 300 comprises a transceiver 302, a control circuit 304 and a memory 308. The central control server 300 is configured to control a distribution system, for example the energy distribution system 100a discussed in connection with Fig. 1a or the fresh water distribution system 100b discussed in connection with Fig. 1b.

The transceiver 302 is configured to communicate with one or more of the plurality of thermal devices 106, one or nor of the one or more devices 105 configured to alter the temperature of the fresh water and/or the thermal server plant 108. The transceiver 302 is further configured to communicate with the drone 114. Hence, the transceiver 302 enables the central control server 300 to establish communications with other devices. That said, the plurality of thermal devices 106, the one or more devices 105 configured to alter the temperature of the fresh water, the thermal server plant 108 and the drone114 also comprises a respective transceiver for communicating with the central control server 300. The communications may include data transfers, and the like. Data transfers may include, but are not limited to, downloading and/or uploading data and receiving or sending messages. The data may be processed by the central control server 300 and/or the plurality of thermal devices 106 and/or the one or more devices 105 configured to alter the temperature of the fresh water and/or the thermal server plant 108 and/or the drone 114. The processing may include storing the data in a memory, e.g. the memory 308 of the central control server 300, executing operations or functions, and so forth.

The control circuit 304 is configured to carry out overall control of operations and functions of the central control server 300. The control circuit 304 may include a processor 306, such as a central processing unit (CPU), microcontroller, or microprocessor. The processor 306 is configured to execute program code stored in the memory 308, in order to carry out operations and functions of the central control server 300.

The memory 308 may be one or more of a buffer, a flash memory, a hard drive, a removable media, a volatile memory, a non-volatile memory, a random access memory (RAM), or another suitable device. In a typical arrangement, the memory 308 may include a non-volatile memory for long term data storage and a volatile memory that functions as system memory for the control circuit 304. The memory 308 may exchange data with the control circuit 304 over a data bus. Accompanying control lines and an address bus between the memory 308 and the control circuit 304 also may be present.

Operations and functions of the central control sever 300 may be embodied in the form of executable logic routines (e.g., lines of code, software programs, etc.) that are stored on a non-transitory computer readable medium (e.g., the memory 308) of the central control server 300 and are executed by the control circuit 304 (e.g., using the processor 306). Furthermore, the operations and functions of the central control server 300 may be a stand-alone software application or form a part of a software application that carries out additional tasks related to the central control server 300. The described operations and functions may be considered a method that the corresponding device is configured to carry out. Also, while the described functions and operations may be implemented in software, such functionality may as well be varied out via dedicated hardware or firmware, or some combination of hardware, firmware, and/or software.

The control circuit 304 is configured to execute a leak alarm function 310. The leak alarm function 310 is configured to generate a leak alarm. The leak alarm indicate existence of a leak in the distribution system 100a, 100b. The leak alarm function 310 may be generated based on the volume of the liquid in the distribution system 100a, 100b and/or based on the rate of change of volume of the liquid in the distribution system 100a, 100b. Upon the volume of the liquid may be below the predetermined threshold, the control circuit 304 may execute the leak alarm function 310.

The control circuit 304 is configured to execute a temperature adjustment function 312. The temperature adjustment function 312 is configured to, in response to the leak alarm, generate the temperature control signal as discussed above. The temperature control signal may comprise information to adjust the temperature of the liquid of the distribution system 100a, 100b. The transceiver 302 may be configured to send the temperature control signal, generated by the control circuit 304, to one or more of the plurality of thermal devices 106 and/or the one or more devices 105 configured to alter the temperature of the fresh water and/or to the thermal server plant 108. Thus, the one or more of the plurality of thermal devices 106 and/or the one or more devices 105 configured to alter the temperature of the fresh water and/or the thermal server plant 108 are/is configured to adjust the temperature of the liquid in the distribution system 100a, 100b in response to the temperature control signal. The temperature of the liquid may be increased or decreased. The temperature of the liquid may be increased or decreased by at least 5 degrees Celsius, preferably at least 10 degrees Celsius. The temperature adjustment may be based on the temperature in the distribution system 100a, 100b under normal operation. The temperature of the liquid may be increased or decreased to achieve a temperature difference between a normal operation temperature of the liquid and a leak detection temperature of the liquid. The temperature difference may be 10 degrees Celsius or more. According to a specific example, the temperature of the liquid may be increased or decreased to achieve a temperature difference between the temperature of the liquid and the temperature of the ground 202. This since at normal operation the temperature of the liquid is typically close to the temperature of the ground 202.

The control circuit 304 is configured to execute a drone activation function 314. The drone activation function 314 is configured to generate the drone control signal. The drone control signal may comprise information to activate the drone 114 to perform a present thermography of the distribution system 100a, 100b. The wording "present" is to be understood as a thermography that is made in present time as a response to the drone control signal. Present time may be within 1-10 hours, preferably 1-6 hours, of the increase or decrease of the temperature of the liquid. The drone 114 comprises a thermal camera in order to be able to perform thermography, especially thermography of the hot conduit 102 and/or the cold conduit 104 of the energy distribution system 100a and/or thermography of the at least one fresh water conduit 103 of the fresh water distribution system 100b. The transceiver 302 is configured to send the drone control signal, generated by the control circuit 304, to the drone 114. Upon the drone 114 receive the drone control signal, the drone 114 is configured to perform thermography of the distribution system 100a, 100b. Especially the hot conduit 102 and/or the cold conduit 104 of the energy distribution system 100a or the at least one fresh water conduit 103 of the fresh water distribution system 100b. The transceiver 302 is configured to receive data pertaining to a thermography performed by the drone 114 from the drone 114. Especially, a present thermography performed by the drone 114.

The drone 114 may also have been instructed to perform a baseline thermography. The baseline thermography is a thermography made while the distribution system 100a, 100b is run under normal operation, preferably without any leak. Data pertaining to the baseline thermography may have been stored in the memory 308 of the server 300, or in any other suitable memory accessible by the server 300. Different baseline thermography may have been made and stored for different normal operation conditions. For example, different baseline thermography may have been made for different outdoor temperatures and/or different liquid temperatures and/or different ground temperatures. Hence, the baseline thermography may comprise a thermography of the distribution system 100a, 100b. Especially of the thermal energy circuit 112 of the energy distribution system 100a, and more especially of the hot conduit 102 and/or the cold conduit 104 of the thermal energy circuit 112 of the energy distribution system 100a. The baseline thermography may comprise a thermography of the at least one fresh water conduit 103 of the fresh water distribution system 100b. The baseline thermography may comprise the thermography of the distribution system 100a, 100b under normal operation.

The present thermography may comprise a thermography of the distribution system 100a,110b in line with the baseline thermography, except that the present thermography may comprise the thermography of the distribution system 100a, 110b wherein the possible leak may exist. Thus, upon the possible leak may exist, the liquid may leak out in the ground 202. Based on that, the temperature of the ground 202 surrounding the leak may be adjusted in line with the adjustment of the temperature of the liquid. The present thermography may be performed within 1-10 hours, preferably 1-6 hours, from the adjustment of the temperature may have been performed.

The control circuit 304 is configured to execute a deviation location function 316. The deviation location function 316 is configured to locate the leak in the distribution system 100a, 100b based on the present thermography. Based on the temperature adjustment of the liquid, a temperature deviation may be seen in the present thermography. The temperature deviation may indicate where the possible leak in the distribution system 100a, 100b is located. A temperature deviation in the ground may occur based on that the liquid have leaked out into the ground 202. The temperature deviation may occur due to a heat transfer between the liquid and the ground 202. By analyzing the present thermography, a possible leak may be found based on the temperature deviation illustrated in the present thermography. The temperature deviation may have occurred based on the temperature adjustment of the liquid. Upon the temperature adjustment may have taken place, the temperature of the liquid is different from the temperature of the ground 202 which surrounds the conduit 102, 103, 104.

The deviation location function 316 may further be configured to compare the present thermography with a baseline thermography of the distribution system 100a, 100b. By analyzing the differences between the present thermography and the baseline thermography, the possible leak may be located. For example, as a deviation between the present thermography and the baseline thermography.

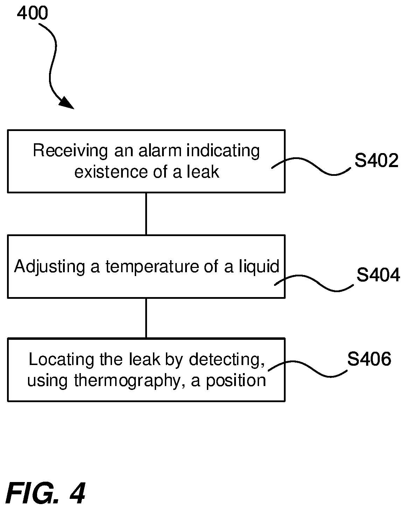

In connection with Fig. 4, a flow chart illustrating a method 400 for locating a leak in a distribution system, e.g. the energy distribution system 100a or the fresh water distribution system 100b, is illustrated. The distribution system 100a, 100b comprises at least one buried conduit 102, 103, 104. The steps of the method may be performed in any order suitable.

The method 400 comprises receiving S402 an alarm indicating existence of a leak in the distribution system 100a, 100b. The step of receiving S402 the alarm indicating existence of the leak in the distribution system 100a, 100b may comprise monitoring a volume of liquid in the distribution system 100a, 100b, and , upon the volume being below a predetermined threshold, the alarm may be generated.

The method 400 further comprises adjusting S404 a temperature of the liquid of the distribution system 100. The adjustment of the temperature is performed in response to receiving the alarm indicating existence of the leak in the distribution system 100a, 100b. The step of adjusting S404 the temperature of the liquid may comprise increasing the temperature. The temperature may be increased by at least 5 degrees Celsius, preferably at least 10 degrees Celsius. The step of adjusting S404 the temperature of the liquid may comprise decreasing the temperature. The temperature may be decreased by at least 5 degrees Celsius, preferably at least 10 degrees Celsius. The step of increasing or decreasing the temperature of the liquid may be based on the temperature of the liquid under normal operation.

The method 400 further comprises locating S406 the leak by detecting, using thermography, a position along the at least one buried conduit 102, 103, 104 at which position a deviation in ground temperature, induced by the adjusted temperature, exist. The thermography may be performed by a drone 114, wherein the drone 114 may comprise a thermal camera. The step of locating S406 the leak by detecting the position may comprise comparing a present thermography with a baseline thermography.

The present thermography may be performed after with 1-10 hours, preferably 1-6 hours, from the step of adjusting S404 the temperature.

The person skilled in the art realizes that the present invention by no means is limited to the preferred embodiments described above. On the contrary, many modifications and variations are possible within the scope of the appended claims.

## Claims

1. A method for locating a leak in a distribution system (100a, 100b) configured to distribute a liquid, the distribution system (100a, 100b) comprising at least one conduit (102, 103, 104) configured to transport the liquid, the at least one conduit (102, 103, 104) being at least partly buried in ground, the method comprising:
receiving (S402) an alarm indicating existence of a leak in the distribution system (100a, 100b); **characterized in**,
in response to the alarm, adjusting (S404) a temperature of the liquid of the distribution system (100a, 100b); and
locating (S406) the leak by detecting, using thermography, a position along the at least one conduit (102, 103, 104) at which position a deviation in ground temperature, induced by the adjusted temperature, exists.

2. The method according to claim 1, wherein the step of receiving (S402) the alarm indicating existence of a leak in the distribution system (100a, 100b) comprises:
monitoring a volume of liquid in the distribution system (100a11027133), and
upon the volume being below a predetermined threshold, generating the alarm.

3. The method according to claim 1, wherein the step of receiving (S402) the alarm indicating existence of a leak in the distribution system (100a, 100b) comprises:
monitoring a rate of decrease of volume of liquid in the distribution system (100a, 100b), and
upon the rate of decrease of volume being above a predetermined threshold, generating the alarm.

4. The method according to any one of claims 1-3, wherein the step of adjusting (S404) the temperature of the liquid of the distribution system (100a, 100b) comprises increasing the temperature, wherein the temperature is increased by at least 5 degrees Celsius, preferably at least 10 degrees Celsius.

5. The method according to any one of claims 1-4, wherein the step of adjusting (S404) the temperature of the liquid of the distribution system (100a, 100b) comprises decreasing the temperature, wherein the temperature is decreased by at least 5 degrees Celsius, preferably at least 10 degrees Celsius.

6. The method according to any one of claims 1-5, wherein the thermography is performed by a drone (114) comprising a thermal camera.

7. The method according to any one of claims 1-6, wherein the detecting (S406) a position comprises comparing a present thermography with a baseline thermography.

8. The method according to any one of claims 1-7, wherein the present thermography is performed within 1-10 hours from the adjusting (S404) of the temperature.

9. The method according to any one of claims 1-8,
wherein the distribution system (100a; 100b) configured to distribute a liquid is an energy distribution system (100a), and wherein the liquid is a heat transfer liquid, or
wherein the distribution system (100a, 100b) configured to distribute a liquid is a fresh water distribution system (100b), and wherein the liquid is water.

10. A central control server (300) configured to control a distribution system (100a, 100b) configured to distribute a liquid, the distribution system (100a, 100b) comprising at least one conduit (102, 103, 104) configured to transport the liquid, the at least one conduit (102, 103, 104) being at least partly buried in ground, the central control server comprising:
a control circuitry (304) configured to execute:
a leak alarm function (310) configured to generate a leak alarm indicating existence of a leak in the distribution system (100a, 100b), **characterized in**
a temperature adjustment function (312) configured to, in response to the leak alarm, generate a temperature control signal, the temperature control signal comprising information to adjust a temperature of the liquid of the distribution system (100a, 100b), and
a drone activation function (314) configured to generate a drone control signal; and
a transceiver (302) configured to:
send the temperature control signal to a device (105, 106, 108) configured to adjust the temperature of the liquid of the distribution system (100a, 100b) in response to the temperature control signal,
send the drone control signal to a drone (114), wherein the drone (114) is configured to perform a present thermography of the distribution system (100a, 100b), and
receive the present thermography from the drone (114),
wherein the control circuitry (304) is further configured to execute a deviation location function (316) configured to locate a leak in the distribution system (100a, 100b) based on the present thermography.

11. The central control server (300) according to claim 10, wherein the deviation location function (316) is configured to locate a leak in the distribution system (100a, 100b) based on a comparison between the present thermography and a baseline thermography of the distribution system (100a, 100b), wherein the baseline thermography is made under normal operation of the system (100a, 100b).

12. The central control server (300) according to claim 10 or 11, wherein the distribution system (100a, 100b) configured to distribute a liquid is a thermal energy distribution system (100a), wherein the liquid is a heat transfer liquid, and wherein the device (105, 106, 108) configured to adjust the temperature of the liquid of the distribution system (100a, 100b) comprises one or more of a thermal device (106) connected to the energy distribution system (100a) and a thermal server plant (108) connected to the energy distribution system (100a).

13. The central control server (300) according to claim 10 or 11, wherein the distribution system (100a, 100b) configured to distribute a liquid is a fresh water distribution system (100b), wherein the liquid is water, and wherein the device (105, 106, 108) configured to adjust the temperature of the liquid of the distribution system (100a, 100b) is a device configured to adjust the temperature of the fresh water and comprises one or more of an electric heater, a heat pump, a cooling machine and a heat exchanger.

14. A system comprising:
an energy distribution system (100a) comprising at least one conduit (102, 104) configured to transport heat transfer liquid, the at least one conduit (102, 104) being at least partly buried in ground;
a plurality of thermal devices (106) connected to the energy distribution system (100);
a drone (114) comprising a thermal camera; and
a central control server (300) according to claim 12.

15. A system comprising:
a fresh water distribution system (100b) comprising at least one conduit (103) configured to transport fresh water, the at least one conduit (103) being at least partly buried in ground;
a device (105) configured to adjust a temperature of the fresh water;
a drone (114) comprising a thermal camera; and
a central control server (300) according to claim 13.

## Patentansprüche

1. Verfahren zum Lokalisieren eines Lecks in einem Verteilungssystem (100a, 100b), das dafür ausgelegt ist, eine Flüssigkeit zu verteilen, wobei das Verteilungssystem (100a, 100b) mindestens eine Leitung (102, 103, 104) umfasst, die dafür ausgelegt ist, die Flüssigkeit zu transportieren, wobei die mindestens eine Leitung (102, 103, 104) wenigstens teilweise unterirdisch verlegt ist, wobei das Verfahren umfasst:
Empfangen (S402) eines Alarms, der das Vorhandensein eines Lecks in dem Verteilungssystem (100a, 100b) anzeigt; **gekennzeichnet durch**,
in Reaktion auf den Alarm, Einstellen (S404) einer Temperatur der Flüssigkeit des Verteilungssystems (100a, 100b); und
Lokalisieren (S406) des Lecks durch Detektieren, unter Anwendung von Thermografie, einer Position entlang der mindestens einen Leitung (102, 103, 104), wobei an dieser Position eine durch die eingestellte Temperatur hervorgerufene Abweichung der Bodentemperatur vorhanden ist.

2. Verfahren nach Anspruch 1, wobei der Schritt des Empfangens (S402) des Alarms, der das Vorhandensein eines Lecks in dem Verteilungssystem (100a, 100b) anzeigt, umfasst:
Überwachen eines Flüssigkeitsvolumens in dem Verteilungssystem (100a11027133), und
wenn das Volumen unter einem vorbestimmten Schwellenwert liegt, Erzeugen des Alarms.

3. Verfahren nach Anspruch 1, wobei der Schritt des Empfangens (S402) des Alarms, der das Vorhandensein eines Lecks in dem Verteilungssystem (100a, 100b) anzeigt, umfasst:
Überwachen einer Abnahmegeschwindigkeit eines Flüssigkeitsvolumens in dem Verteilungssystem (100a, 100b), und
wenn die Abnahmegeschwindigkeit des Volumens über einem vorbestimmten Schwellenwert liegt, Erzeugen des Alarms.

4. Verfahren nach einem der Ansprüche 1-3, wobei der Schritt des Einstellens (S404) der Temperatur der Flüssigkeit des Verteilungssystems (100a, 100b) ein Erhöhen der Temperatur umfasst, wobei die Temperatur um mindestens 5 Grad Celsius, vorzugsweise um mindestens 10 Grad Celsius erhöht wird.

5. Verfahren nach einem der Ansprüche 1-4, wobei der Schritt des Einstellens (S404) der Temperatur der Flüssigkeit des Verteilungssystems (100a, 100b) ein Verringern der Temperatur umfasst, wobei die Temperatur um mindestens 5 Grad Celsius, vorzugsweise um mindestens 10 Grad Celsius verringert wird.

6. Verfahren nach einem der Ansprüche 1-5, wobei die Thermografie von einer Drohne (114) durchgeführt wird, die eine Wärmebildkamera umfasst.

7. Verfahren nach einem der Ansprüche 1-6, wobei das Detektieren (S406) einer Position das Vergleichen einer aktuellen Thermografieaufnahme mit einer Bezugs-Thermografieaufnahme umfasst.

8. Verfahren nach einem der Ansprüche 1-7, wobei die aktuelle Thermografie innerhalb von 1-10 Stunden nach dem Einstellen (S404) der Temperatur durchgeführt wird.

9. Verfahren nach einem der Ansprüche 1-8,
wobei das Verteilungssystem (100a, 100b), das dafür ausgelegt ist, eine Flüssigkeit zu verteilen, ein Energieverteilungssystem (100a) ist, und wobei die Flüssigkeit eine Wärmeübertragungsflüssigkeit ist, oder
wobei das Verteilungssystem (100a, 100b), das dafür ausgelegt ist, eine Flüssigkeit zu verteilen, ein Frischwasserverteilungssystem (100b) ist, und wobei die Flüssigkeit Wasser ist.

10. Zentraler Steuerserver (300), welcher dafür ausgelegt ist, ein Verteilungssystem (100a, 100b) zu steuern, das dafür ausgelegt ist, eine Flüssigkeit zu verteilen, wobei das Verteilungssystem (100a, 100b) mindestens eine Leitung (102, 103, 104) umfasst, die dafür ausgelegt ist, die Flüssigkeit zu transportieren, wobei die mindestens eine Leitung (102, 103, 104) wenigstens teilweise unterirdisch verlegt ist, wobei der zentrale Steuerserver umfasst:
eine Steuerschaltungsanordnung (304), die dafür ausgelegt ist auszuführen:
eine Leckalarmfunktion (310), die dafür ausgelegt ist, einen Leckalarm zu erzeugen, der das Vorhandensein eines Lecks in dem Verteilungssystem (100a, 100b) anzeigt; **gekennzeichnet durch**
eine Temperatureinstellfunktion (312), die dafür ausgelegt ist, in Reaktion auf den Leckalarm ein Temperatursteuersignal zu erzeugen, wobei das Temperatursteuersignal Informationen umfasst, um eine Temperatur der Flüssigkeit des Verteilungssystems (100a, 100b) einzustellen, und
eine Drohnenaktivierungsfunktion (314), die dafür ausgelegt ist, ein Drohnensteuersignal zu erzeugen; und
einen Sendeempfänger (302), der dafür ausgelegt ist:
das Temperatursteuersignal an eine Vorrichtung (105, 106, 108) zu senden, die dafür ausgelegt ist, die Temperatur der Flüssigkeit des Verteilungssystems (100a, 100b) in Reaktion auf das Temperatursteuersignal einzustellen,
das Drohnensteuersignal an eine Drohne (114) zu senden, wobei die Dohne (114) dafür ausgelegt ist, eine aktuelle Thermografie des Verteilungssystems (100a, 100b) durchzuführen, und
die aktuelle Thermografieaufnahme von der Drohne (114) zu empfangen,
wobei die Steuerschaltungsanordnung (304) ferner dafür ausgelegt ist, eine Abweichungslokalisierungsfunktion (316) auszuführen, die dafür ausgelegt ist, ein Leck in dem Verteilungssystem (100a, 100b) basierend auf der aktuellen Thermografieaufnahme zu lokalisieren.

11. Zentraler Steuerserver (300) nach Anspruch 10, wobei die Abweichungslokalisierungsfunktion (316) dafür ausgelegt ist, ein Leck in dem Verteilungssystem (100a, 100b) basierend auf einem Vergleich zwischen der aktuellen Thermografieaufnahme und einer Bezugs-Thermografieaufnahme des Verteilungssystems (100a, 100b) zu lokalisieren, wobei die Bezugs-Thermografieaufnahme bei normalem Betrieb des Systems (100a, 100b) hergestellt wird.

12. Zentraler Steuerserver (300) nach Anspruch 10 oder 11, wobei das Verteilungssystem (100a, 100b), das dafür ausgelegt ist, eine Flüssigkeit zu verteilen, ein Wärmeenergieverteilungssystem (100a) ist, wobei die Flüssigkeit eine Wärmeübertragungsflüssigkeit ist und wobei die Vorrichtung (105, 106, 108), die dafür ausgelegt ist, die Temperatur der Flüssigkeit des Verteilungssystems (100a, 100b) einzustellen, eine thermische Vorrichtung (106), die mit dem Energieverteilungssystem (100a) verbunden ist, und/oder eine Wärmebereitstellungsanlage (108), die mit dem Energieverteilungssystem (100a) verbunden ist, umfasst.

13. Zentraler Steuerserver (300) nach Anspruch 10 oder 11, wobei das Verteilungssystem (100a, 100b), das dafür ausgelegt ist, eine Flüssigkeit zu verteilen, ein Frischwasserverteilungssystem (100b) ist, wobei die Flüssigkeit Wasser ist und wobei die Vorrichtung (105, 106, 108), die dafür ausgelegt ist, die Temperatur der Flüssigkeit des Verteilungssystems (100a, 100b) einzustellen, eine Vorrichtung ist, die dafür ausgelegt ist, die Temperatur des Frischwassers einzustellen, und eine elektrische Heizvorrichtung, eine Wärmepumpe, eine Kältemaschine und/oder einen Wärmetauscher umfasst.

14. System, welches umfasst:
ein Energieverteilungssystem (100a), das mindestens eine Leitung (102, 104) umfasst, die dafür ausgelegt ist, Wärmeübertragungsflüssigkeit zu transportieren, wobei die mindestens eine Leitung (102, 104) wenigstens teilweise unterirdisch verlegt ist;
mehrere thermische Vorrichtungen (106), die mit dem Energieverteilungssystem (100) verbunden sind;
eine Drohne (114), die eine Wärmebildkamera umfasst; und
einen zentralen Steuerserver (300) nach Anspruch 12.

15. System, welches umfasst:
ein Frischwasserverteilungssystem (100b), das mindestens eine Leitung (103) umfasst, die dafür ausgelegt ist, Frischwasser zu transportieren, wobei die mindestens eine Leitung (103) wenigstens teilweise unterirdisch verlegt ist;
eine Vorrichtung (105), die dafür ausgelegt ist, eine Temperatur des Frischwassers einzustellen;
eine Drohne (114), die eine Wärmebildkamera umfasst; und
einen zentralen Steuerserver (300) nach Anspruch 13.

## Revendications

1. Procédé de localisation de fuite dans un système de distribution (100a, 100b) configuré pour distribuer un liquide, le système de distribution (100a, 100b) comprenant au moins un conduit (102, 103, 104) configuré pour transporter le liquide, l'au moins un conduit (102, 103, 104) étant au moins partiellement enterré dans le sol, le procédé comprenant :
la réception (S402) d'une alarme indiquant l'existence d'une fuite dans le système de distribution (100a, 100b) ; **caractérisé en ce que**
en réponse à l'alarme, le réglage (S404) d'une température du liquide du système de distribution (100a, 100b) ; et
la localisation (S406) de la fuite par détection, par thermographie, d'une position le long de l'au moins un conduit (102, 103, 104), laquelle est une position présentant un écart dans la température du sol, induite par la température réglée.

2. Procédé selon la revendication 1, dans lequel l'étape de réception (S402) de l'alarme indiquant l'existence d'une fuite dans le système de distribution (100a, 100b) comprend :
la surveillance d'un volume de liquide dans le système de distribution (100a11027133), et
la génération de l'alarme lorsque le volume est inférieur à un seuil prédéterminé.

3. Procédé selon la revendication 1, dans lequel l'étape de réception (S402) de l'alarme indiquant l'existence d'une fuite dans le système de distribution (100a, 100b) comprend :
la surveillance d'un taux de diminution de volume de liquide dans le système de distribution (100a, 100b), et
lorsque le taux de diminution de volume est supérieur à un seuil prédéterminé, la génération de l'alarme.

4. Procédé selon l'une quelconque des revendications 1 à 3, dans lequel l'étape de réglage (S404) de la température du liquide du système de distribution (100a, 100b) comprend l'augmentation de la température, dans lequel la température est augmentée d'au moins 5 degrés Celsius, de préférence d'au moins 10 degrés Celsius.

5. Procédé selon l'une quelconque des revendications 1 à 4, dans lequel l'étape de réglage (S404) de la température du liquide du système de distribution (100a, 100b) comprend la diminution de la température, dans lequel la température est diminuée d'au moins 5 degrés Celsius, de préférence d'au moins 10 degrés Celsius.

6. Procédé selon l'une quelconque des revendications 1 à 5, dans lequel la thermographie est effectuée par un drone (114) comprenant une caméra thermique.

7. Procédé selon l'une quelconque des revendications 1 à 6, dans lequel la détection (S406) d'une position comprend la comparaison d'une thermographie actuelle avec une thermographie de référence.

8. Procédé selon l'une quelconque des revendications 1 à 7, dans lequel la thermographie actuelle est effectuée dans un délai de 1 à 10 heures à partir du réglage (S404) de la température.

9. Procédé selon l'une quelconque des revendications 1 à 8,
dans lequel le système de distribution (100a, 100b) configuré pour distribuer un liquide est un système de distribution d'énergie (100a), et dans lequel le liquide est un liquide caloporteur, ou
dans lequel le système de distribution (100a, 100b) configuré pour distribuer est un système de distribution d'eau potable (100b), et dans lequel le liquide est de l'eau.

10. Serveur de commande central (300) configuré pour commander un système de distribution (100a, 100b) configuré pour distribuer un liquide, le système de distribution (100a, 100b) comprenant au moins un conduit (102, 103, 104) configuré pour transporter le liquide, l'au moins un conduit (102, 103, 104) étant au moins partiellement enterré dans le sol, le serveur de commande central comprenant :
un circuit de commande (304) configuré pour exécuter :
une fonction d'alarme de fuite (310) configurée pour générer une alarme de fuite indiquant l'existence d'une fuite dans le système de distribution (100a, 100b), **caractérisé en ce que**
une fonction de réglage de température (312) configurée pour générer un signal de commande de température en réponse à l'alarme de fuite, le signal de commande de température comprenant des informations pour le réglage d'une température du liquide du système de distribution (100a, 100b), et
une fonction d'activation de drone (314) configurée pour générer un signal de commande de drone ; et
un émetteur-récepteur (302) configuré pour :
envoyer le signal de commande de température à un dispositif (105, 106, 108) configuré pour régler la température du liquide du système de distribution (100a, 100b) en réponse au signal de commande de température,
envoyer le signal de commande de drone (114), dans lequel le drone (114) est configuré pour effectuer une thermographie actuelle du système de distribution (100a, 100b), et
recevoir la thermographie actuelle à partir du drone (114),
dans lequel le circuit de commande (304) est en outre configuré pour exécuter une fonction de localisation d'écart (316) configurée pour localiser une fuite dans le système de distribution (100a, 100b) sur la base de la thermographie actuelle.

11. Serveur de commande central (300) selon la revendication 10, dans lequel la fonction de localisation d'écart (316) est configurée pour localiser une fuite dans le système de distribution (100a, 100b) sur la base d'une comparaison entre la thermographie actuelle et une thermographie de référence du système de distribution (100a, 100b), dans lequel la thermographie de référence est réalisée dans des conditions de fonctionnement normales du système (100a, 100b).

12. Serveur de commande central (300) selon la revendication 10 ou 11, dans lequel le système de distribution (100a, 100b) configuré pour distribuer un liquide est un système de distribution d'énergie thermique (100a), dans lequel le liquide est un liquide caloporteur, et dans lequel le dispositif (105, 106, 108) configuré pour régler la température du liquide du système de distribution (100a, 100b) comprend l'un ou plusieurs parmi un dispositif thermique (106) raccordé au système de distribution d'énergie (100a) et une installation de serveur thermique (108) raccordée au système de distribution d'énergie (100a).

13. Serveur de commande central (300) selon la revendication 10 ou 11, dans lequel le système de distribution (100a, 100b) configuré pour distribuer un liquide est un système de distribution d'eau potable (100b), dans lequel le liquide est de l'eau, et dans lequel le dispositif (105, 106, 108) configuré pour régler la température du liquide du système de distribution (100a, 100b) est un dispositif configuré pour régler la température de l'eau potable et comprend l'un ou plusieurs parmi un chauffage électrique, une pompe à chaleur, une machine de refroidissement et un échangeur de chaleur.

14. Système comprenant :
un système de distribution d'énergie (100a) comprenant au moins un conduit (102, 104) configuré pour transporter du liquide caloporteur, l'au moins un conduit (102, 104) étant au moins partiellement enterré dans le sol ;
une pluralité de dispositifs thermiques (106) raccordés au système de distribution d'énergie (100) ;
un drone (114) comprenant une caméra thermique ; et
un serveur de commande central (300) selon la revendication 12.

15. Système comprenant :
un système de distribution d'eau potable (100b) comprenant au moins un conduit (103) configuré pour transporter de l'eau potable, l'au moins un conduit (103) étant au moins partiellement enterré dans le sol ;
un dispositif (105) configuré pour régler une température de l'eau potable ;
un drone (114) comprenant une caméra thermique ; et
un serveur de commande central (300) selon la revendication 13.
